# EUROPÄISCHE PATENTSCHRIFT

(11) **EP 3 565 092 B1**
(45) Veröffentlichungstag und Bekanntmachung des Hinweises auf die Patenterteilung: **05.01.2022**
(21) Anmeldenummer: 19180290.9
(22) Anmeldetag: 08.11.2012
(51) Int. Cl.: H02K 7/00, H02K 11/21

(54) **ELEKTRISCHE MASCHINE**
ELECTRIC MACHINE
MACHINE ÉLECTRIQUE

(30) Priorität: 21.11.2011 DE 102011118919
(43) Veröffentlichungstag der Anmeldung: 06.11.2019
(62) Teilanmeldung aus: 12791096.6
(73) Patentinhaber: Baumüller Nürnberg GmbH, 90482 Nürnberg (DE)
(72) Erfinder: MEISTER, Birgid, 97320 Sulzfeld (DE); VEEH, Michael, 97271 Kleinrinderfeld (DE)
(74) Vertreter: FDST Patentanwälte

(56) Entgegenhaltungen:
- DE-A1-102008 028 658
- DE-U1- 29 714 743
- US-A- 3 877 827
- US-A1- 2010 225 186
- Anonymous: "Keys and Splines", Thecartech.com , 27. Mai 2010 (2010-05-27), XP002722409, Gefunden im Internet: URL:http://www.thecartech.com/subjects/mac hine_elements_design/keys_and_Splines.htm [gefunden am 2014-03-27]

## Beschreibung

Die Erfindung betrifft eine elektrische Maschine mit einem Maschinengehäuse zur Aufnahme eines Stators und eines Rotors, insbesondere mit Stator- und/oder Rotorwicklungen, gemäß dem Oberbegriff des Anspruchs 1. Eine derartige elektrische Maschine ist aus der DE 10 2008 028 658 A1 bekannt. Bei der elektrischen Maschine kann es sich um einen Motor oder um einen Generator handeln.

Je nach Betrieb einer derartigen elektrischen Maschine als Motor oder als Generator wird die elektrische Leistung entweder der Maschine für die gewünschte Drehzahl und das bestimmungsgemäße Drehmoment zugeführt, oder der elektrischen Maschine wird die elektrische Leistung entnommen und für nachgeschaltete Aggregate, beispielsweise eines Nutzfahrzeuges, insbesondere im Inselbetrieb, entnommen. In der Betriebsweise als Generator wird der generatorisch erzeugte mehrphasige Wechselstrom mittels einer Elektronik (Umrichter) in einen Gleichstrom gewandelt, der dann beispielsweise über einen Zwischenkreis dem jeweiligen Aggregat oder Verbraucher zugeführt wird.

Der elektrischen Maschine ist häufig ein Anbauteil zugeordnet, das auf die Maschinenwelle aufgesetzt oder an diese angesetzt ist beziehungsweise wird, wobei das Anbauteil selbst oder ein Bestandteil desselben mit der Maschinenwelle wellenfest zu verbinden ist.

Der Erfindung liegt die Aufgabe zugrunde, eine besonders geeignete (mechanische) Schnittstelle zur Anbindung eines Anbauteils anzugeben. Die Schnittstelle beziehungsweise Anbindung soll dabei möglichst einfach, zuverlässig und/oder dauerhaft sein, insbesondere im Hinblick auf betriebsbedingt auftretende Kräfte (Scher- und/oder Fliehkräfte).

Diese Aufgabe wird gelöst durch eine elektrische Maschine mit den Merkmalen des Anspruchs 1. Bevorzugte Ausführungsformen sind in den abhängigen Ansprüchen beschrieben.

Die erfindungsgemäße Schnittstelle ist dazu vorgesehen und/oder ausgebildet zwischen der Maschinenwelle und dem Anbauteil eine form- und/oder kraftschlüssige Verbindung, insbesondere nach Art beziehungsweise zur Bereitstellung einer Momentenabstützung, herzustellen. Hierzu ist wellenseitig eine Passfeder oder ein Passfederelement vorgesehen, die beziehungsweise das mit einer korrespondierenden Verbindungs- oder Schnittstellenkontur des Anbauteils zusammenwirkt. Diese anbauseitige Kontur ist geeigneter Weise in oder an einem Verbindungsoder Schnittstellenstutzen des Anbauteils vorgesehen. Dieser Verbindungs- oder Schnittstellenstutzen des Anbauteils nimmt einen Wellenabschnitt, insbesondere ein Wellenende, der Maschinenwelle auf. Die anbauteilseitige Schnittstellenkontur ist vorzugsweise in Form einer stirnseitig, das heißt zur Passfeder beziehungsweise zum Passfederelement hin offenen Nut, Kerbe, Ausnehmung oder dergleichen ausgebildet.

Das nachfolgend als Passfeder oder Passfederelement bezeichnete wellenseitige Schnittstellenelement sitzt in einer wellenseitigen Passnut, insbesondere nach Art einer Presspassung, ein. Bei dieser Passnut handelt es sich um eine sowohl in Axialrichtung als auch in Umfangsrichtung der Maschinenwelle begrenzte, lokale Ausnehmung in der Maschinenwelle. Mit anderen Worten handelt es sich bei der Passnut gerade nicht um eine Ringnut, die sich über den gesamten Wellenumfang oder einen wesentlichen Teil des Wellenumfangs der Maschinenwelle erstreckt. Vielmehr ist die umfangseitige oder tangentiale Ausdehnung der erfindungsgemäßen Passnut auf einen Bruchteil des Wellenumfangs begrenzt, wobei dieser Bruchteil weniger, insbesondere wesentlich weniger als einem Viertel des Wellenumfangs entspricht.

Die axiale Ausdehnung der erfindungsgemäßen Passnut ist ebenfalls auf einen geringen Bruchteil der Maschinenwelle begrenzt. Vorzugsweise ist die axiale Ausdehnung der wellenseitigen Passnut grösser als die umfangseitige beziehungsweise tangentiale Ausnehmung der erfindungsgemäßen Passnut. Zudem ist die erfindungsgemäße Passnut, die im Wesentlichen rechteckförmig ausgebildet ist und deren Längserstreckung in Axialrichtung der Maschinenwelle verläuft, mit abgerundeten Passnutecken ausgeführt.

Die Passfeder als (wesentliches) Schnittstellenelement ist ein Formteil mit einem Passkörper oder Passkörperabschnitt und einem daran angesetzten, insbesondere angeformten, Federkörper. Während der Passkörper der Passfeder vollständig in der wellenseitigen Passnut einliegt, erstreckt sich der Federkörper der Passfeder radial über den Wellenumfang der Maschinenwelle hinaus und ragt somit an der lokalen, exponierten Schnittstelle aus der Maschinenwelle umfangseitig heraus. Die im wellenseitigen Passsitz radiale Höhe der Passfeder, d. h. dessen Passkörpers ist vorzugsweise geringer als die (radiale) Tiefe der wellenseitigen Passnut.

Der Federkörper der Passfeder ist kleiner als dessen Passkörper. Der Federkörper ist gegenüber dem Passkörper der Passfeder zurückgesetzt, so dass ein nachfolgend auch als Überdeckungsabschnitt bezeichneter Passkörperabschnitt gebildet ist. Im Passsitz des Passkörpers in der Passnut der Maschinenwelle fluchtet dieser Überdeckungsabschnitt der Passfeder mit der Wellenoberfläche der Maschinenwelle oder ist bevorzugt dieser gegenüber radial zumindest geringfügig zur Wellenachse hin (radial nach innen) zurückgesetzt. Hierdurch soll sichergestellt werden, dass der Überdeckungsabschnitt der Passfeder nicht über die Wellenoberfläche der Maschinenwelle hinausragt.

In der schnittstellenseitigen mechanischen Verbindung des Anbauteils mit der Maschinenwelle überdeckt das Anbauteil beziehungsweise dessen Verbindungsstutzen den Passkörper- oder Überdeckungsabschnitt der Passfeder. Gleichzeitig greift der Federkörper der Passfeder in die anbauteilseitige Verbindungskontur vorzugsweise formschlüssig ein. Somit ist einerseits eine zuverlässige wellenfeste Verbindung zwischen dem Anbauteil und der Maschinenwelle hergestellt, und eine rotatorische Relativbewegung zwischen dem Anbauteil und der Maschinenwelle zuverlässig ist verhindert.

Gleichzeitig ist infolge der Überdeckung des Passkörperabschnitts beziehungsweise Überdeckungsabschnitts der Passfeder durch das Anbauteil bzw. dessen Verbindungsstutzen ein Herauslösen der Passfeder aus der wellenseitigen Passnut, insbesondere aufgrund von Fliehkräften, zuverlässig unterbunden. Zudem ist aufgrund des ausreichenden, auf die betriebsbedingt wirksamen Kräfte angepassten Volumens der Passfeder ein Abscheren des Federkörpers der Passfeder zuverlässig vermeidbar, indem durch Material und Baugröße bzw. geometrische Abmessungen der Passfeder die in diese über den in der Schnittstelle wirksamen Federkörper eingebrachten Kräfte zuverlässig aufgenommen werden können.

Zusätzlich zu der Formschlussverbindung in der Schnittstelle zwischen der wellenseitigen Passfeder und der anbauteilseitigen Verbindungskontur wird vorzugsweise eine Kraft- oder Reibschlussverbindung zwischen der Maschinenwelle und dem Anbauteil hergestellt. Hierzu weist die Maschinenwelle geeigneterweise eine zweckmäßig sich über den Wellenumfang der Maschinenwelle erstreckende Kragen- oder Schulterkontur auf, an oder gegen die eine korrespondierende Anlagekontur des Anbauteils in dessen Verbindung mit der Maschinenwelle geführt ist. Mittels einer vorzugsweise axialen Schraubverbindung zwischen dem Anbauteil und der Maschinenwelle wird der Kraftschluss zwischen der wellenseitigen Schulter- bzw. Kragenkontur und der anbauteilseitigen Anlagekontur hergestellt, die geeigneterweise stirnseitig am Verbindungsstutzen des Anbauteils gebildet ist. Für diese Schraubverbindung ist in die Maschinenwelle von deren der Schnittstelle zugewandten Stirnseite her eine Gewindebohrung in die Maschinenwelle eingebracht.

Bevorzugt ist das Anbauteil ein Geber und/oder Sensor zur Bestimmung der (absoluten) Winkellage der Maschinenwelle bzw. des Rotors der elektrischen Maschine. Die erfindungsgemäße Passfeder-Schnittstelle eignet sich daher bevorzugt zur Momentenabstützung eines Resolvers (Resolvermomentenabstützung), das heißt, der wellenfesten Anbindung dessen Geberrotors an die Maschinenwelle der elektrischen Maschine.

Nachfolgend wird ein Ausführungsbeispiel der Erfindung anhand einer Zeichnung näher erläutert. Darin zeigen:
- Fig. 1: in perspektivischer Darstellung eine elektrische Maschine mit Blick auf einen (lagerschildseitigen) Wellenzapfen einer Maschinenwelle mit erfindungsgemäßer Passfeder-Schnittstelle,
- Fig. 2: die elektrische Maschine gemäß Fig. 1 in einem (axialen) Längsschnitt,
- Fig. 3: einen Ausschnitt III aus Fig. 2 in größerem Maßstab mit in eine wellenseitige Passnut eingesetzter Passfeder,
- Fig. 4: schematisch in einer Seitenansicht bzw. (teilweisen) Schnittdarstellung die Schnittstellenverbindung zwischen der wellenseitigen Passfeder und einem Anbauteil,
- Fig. 5: die Verbindung/Anbindung des Anbauteils mit der Maschinenwelle in einer Draufsicht auf die Passfeder-Schnittstelle,
- Fig. 6: in einer perspektivischen Darstellung die Passfeder mit einem Passkörper und einem erhabenen Federkörper, und
- Fig. 7: in Stirnansicht eine erfindungsgemäße Schnittstelle zwischen einer Welle und einem Anbauteil bzw. einem Wellenanschluss hiervon mit wellenseitiger Passnut und darin einsetzbarer Passfeder sowie mit einer Schraubbefestigung,
- Fig. 8: die Schnittstelle in einer Schnittdarstellung entlang der Linie VIIIVIII in Fig. 7,
- Fig. 9: die Schnittstelle im Querschnitt entlang der Linie IX-IX in Fig. 8,
- Fig. 10: in perspektivischer Darstellung die Schnittstelle zwischen Welle und Anbauteil bzw. Wellenanschluss mit wellenseitiger Passnut und darin einsetzbarer Passfeder sowie mit einer Schraubbefestigung, und
- Fig. 11: die Schnittstelle gemäß Fig.10 in einer Explosionsdarstellung.

Einander entsprechende Teile sind in allen Figuren mit den gleichen Bezugszeichen versehen.

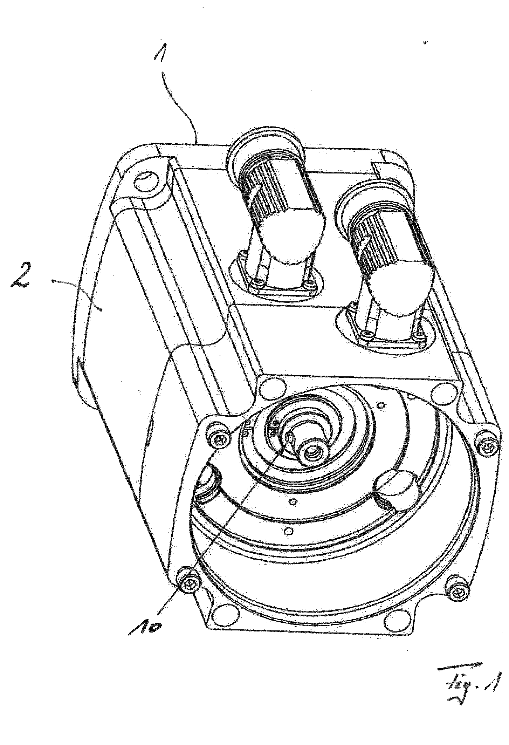

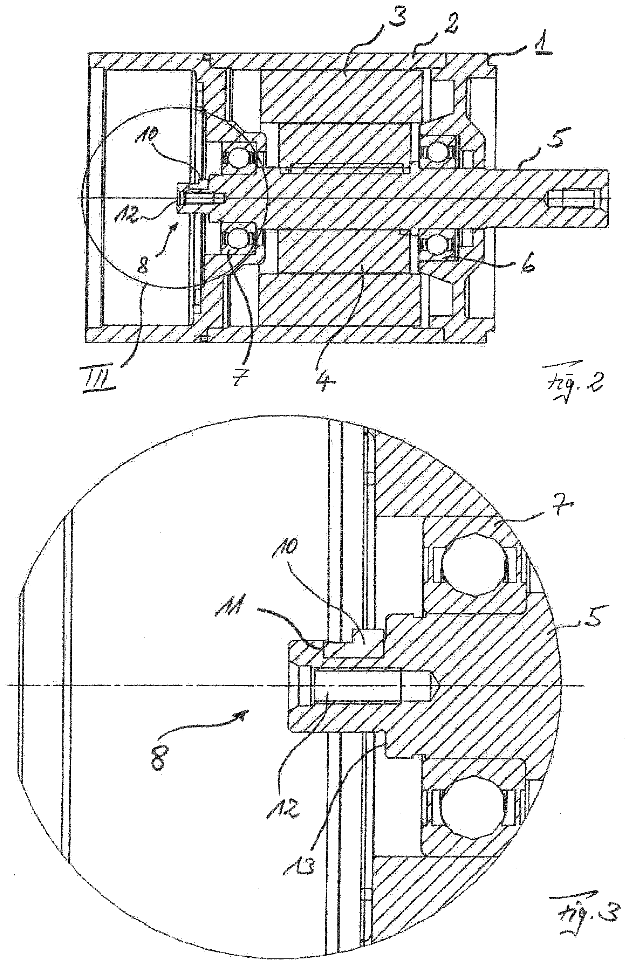

Die in den Fig. 1 und 2 gezeigte elektrische Maschine 1 weist ein Maschinengehäuse 2 zur Aufnahme eines Stators 3 und eines von diesem umgebenen Rotors 4 auf, der auf einer nachfolgend allgemein auch als Welle bezeichneten Maschinenwelle 5 sitzt. Der Rotor 4 bzw. die Maschinenwelle 5 ist in einem ersten Lager (Kugel- oder Wälzlager) 6 und in einem zweiten Lager (Kugel- oder Wälzlager) 7 innerhalb des Maschinengehäuses 2 gelagert.

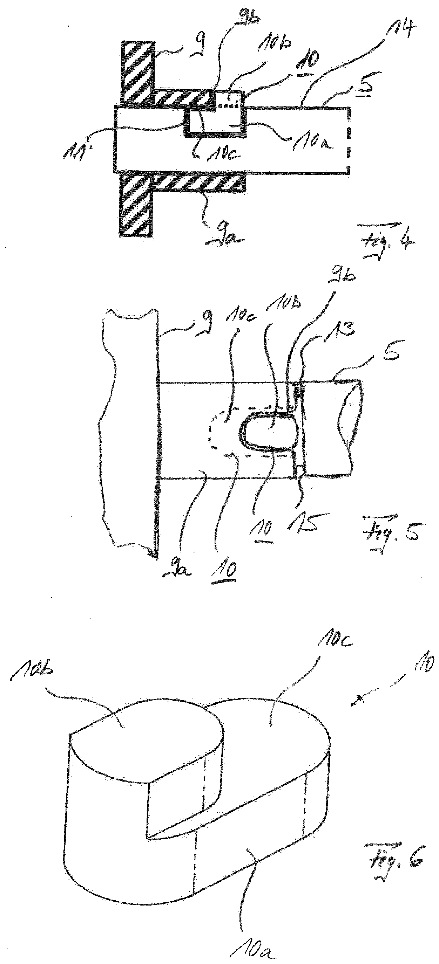

Dem in der Fig. 1 linken Lager 7 zugewandt befindet sich eine Schnittstelle 8 zur Anbindung eines Anbauteils 9 (Fig. 4, 5 und 7). Bestandteil der Schnittstelle 8 ist ein nachfolgend als Passfeder bezeichnetes Passfederelement 10. Diese bzw. dieses ist in eine wellenseitige Passnut 11 passgenau, vorzugsweise unter Bildung eines Presssitzes, eingesetzt. Im Bereich der Passfeder-Schnittstelle 8 ist - von der dem Lager 7 zugewandten Wellenstirnseite her - in die Maschinenwelle 5 eine Gewindebohrung 12 eingebracht. Zudem weist die Maschinenwelle 5 im Bereich der Passfeder-Schnittstelle 8 eine Schulter- oder Kragenkontur 13 auf, die eine Anlage (Anlage- oder Anschlagfläche), vorzugsweise eine sich über den Wellenumfang erstreckende ringförmige Anschlag- bzw. Anlagefläche bildet.

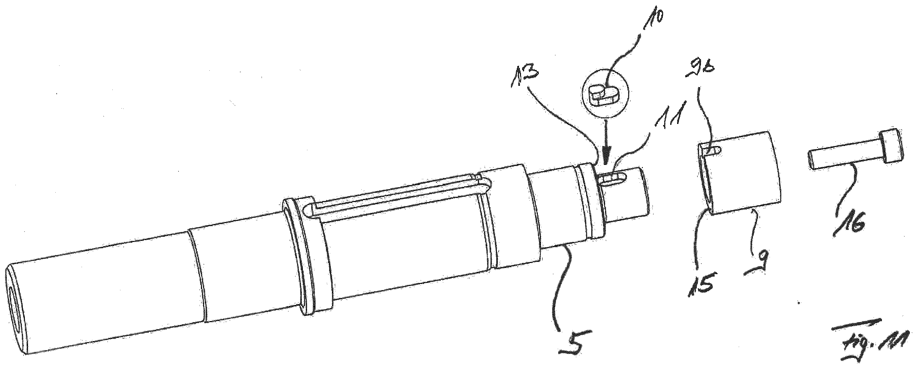

Gemäß den Fig. 4 bis 11 weist die Passfeder 10 einen im Wesentlichen rechteckförmigen Passkörper 10a mit vorzugsweise abgerundeten Eckbereichen auf. An diesem ist ein Federkörper 10b angeformt, der über den Passkörper 10a hinaussteht und an einer Schmalseite des Passfederkörpers mit diesem fluchtet. Ansonsten ist der Federkörper 10b gegenüber dem Passkörper 10a zurückversetzt, so dass eine Überdeckungsfläche beziehungsweise ein Passkörperabschnitt 10c gebildet ist.

Im Pass- oder Presssitz der Passfeder 10 innerhalb der wellenseitigen Passnut 11 fluchtet dieser Überdeckungsabschnitt (Passkörperabschnitt) 10c mit der Wellenoberfläche 14 der Welle 5. Vorzugsweise ist jedoch die radiale Höhe des Passkörpers 10a zumindest geringfügig kleiner als die radiale Tiefe der Passnut 11.

Im in den Fig. 4, 5 und 7 bis 10 gezeigten Montagezustand überdeckt das Anbauteil 9 bzw. dessen Verbindungsstutzen 9a den Überdeckungs- bzw. Passkörperabschnitt 10c der Passfeder 10, während der Federkörper 10b der Passfeder 10, vorzugsweise formschlüssig, in einer einseitig offenen Verbindungskontur 9b des Anbauteils 9 bzw. dessen Verbindungsstutzen 9a einsitzt oder in diese eingreift. Stirnseitig liegt der Verbindungsstutzen 9a bzw. das Anbauteil 9 mit einer Anlagefläche 15 an der durch die Schulter- bzw. Kragenkontur 13 der Welle 5 gebildeten wellenseitigen Anlage- oder Gegenlagerfläche 13 an.

Eine Kraftschlussverbindung zwischen der Welle 5 und dem Anbauteil 9 bzw. kraftschlüssige Anlage der anbauteilseitigen Anlagefläche 15 an der wellenseitigen Anlagefläche 13 wird mittels einer axialen Schraubverbindung zwischen dem Anbauteil 9 und der Welle 5 hergestellt. Hierzu ist/wird geeigneterweise in die wellenseitige Gewindebohrung 12 eine entsprechende Schraube 16 (vorzugsweise mit metrischen Gewinde) eingeschraubt.

Die Erfindung ist nicht auf die vorstehend beschriebenen Ausgestaltungen beschränkt. Insbesondere sind ferner alle beschriebenen Einzelmerkmale auch auf andere Weise miteinander kombinierbar, ohne den Gegenstand der Erfindung zu verlassen.

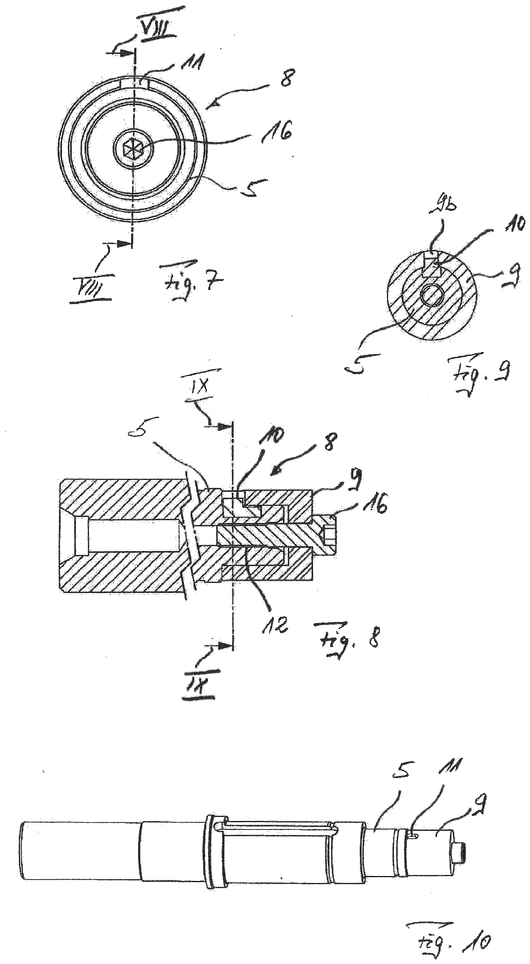

So zeigen die Fig. 7 bis 11 allgemein zwischen einer Welle 5 und einem Anbauteil 9 eine Schnittstelle 8 mit einer wellenseigen Passfeder 10 und einer anbauteilseitigen Verbindungs- oder Formschlusskontur 9b. Ein zusätzlicher Kraftschluss wird, insbesondere zwischen der anbauteilseitigen Anlagefläche (Anlage) 15 und der wellenseitigen Anlagefläche (Anlage) 13, mittels der (wellenstirnseitigen) Schraubverbindung 12, 16 hergestellt.

### Bezugszeichenliste

- 1: elektrische Maschine
- 2: Maschinengehäuse
- 3: Stator
- 4: Rotor
- 5: Maschinen-/Welle
- 6, 7: Lager
- 8: Schnittstelle
- 9: Anbauteil
- 9a: Verbindungsstutzen
- 9b: Verbindungskontur
- 10: Passfeder/ -element
- 10a: Passkörper
- 10b: Federkörper
- 10c: Passkörper- /Überdeckungsabschnitt
- 11: Passnut
- 12: Gewindebohrung
- 13: Schulter-/Kragenkontur bzw. wellenseitige Anlage/-fläche
- 14: Wellenoberfläche
- 15: anlagenteilseitige Anlage/-fläche

## Patentansprüche

1. Elektrische Maschine mit einem Maschinengehäuse (2) zur Aufnahme eines Stators (3) und eines auf einer Maschinenwelle (5) sitzenden Rotors (4) sowie mit einem mit der Maschinenwelle (5) über eine mechanische Schnittstelle (8) verbundenen Anbauteil (9),
- wobei die Schnittstelle (8) zur Herstellung einer Form- und/oder Kraftschlussverbindung zwischen einem wellenseitigen Passfederelement (10) und einem auf der Maschinenwelle (5) sitzenden Verbindungsstutzen (9a) des Anbauteils (9) vorgesehen und ausgebildet ist, und
- wobei in der Maschinenwelle (5) eine sowohl in deren Axialrichtung als auch in deren Umfangsrichtung lokale Ausnehmung als wellenseitige Passnut (11) vorgesehen ist, in welcher der Passkörper (10a) einsitzt,
**dadurch gekennzeichnet,**
- **dass** das Passfederelement (10) einen Passkörper (10a) und einen Federkörper (10b) umfasst, der gegenüber dem Passkörper (10a) erhaben und unter Bildung eines Überdeckungsabschnitts (10c) zurückgesetzt ist,
- **dass** der Überdeckungsabschnitt (10c) mit der Wellenoberfläche (14) der Maschinenwelle (5) fluchtet oder gegenüber der Wellenoberfläche (14) zur Wellenachse hin zumindest geringfügig radial nach innen zurückgesetzt ist,
- **dass** in der Verbindung mit dem Anbauteil (9) der Überdeckungsabschnitt (10c) des Passfederelement (10) vom Anbauteil (9) überdeckt ist und der Federkörper (10b) in einer stirnseitig offenen Verbindungskontur (9b) des Anbauteils (9) einsitzt.

2. Elektrische Maschine nach Anspruch 1,
**dadurch gekennzeichnet,**
**dass** der Federkörper (10b) an einer Schmalseite des Passkörpers (10a) mit diesem fluchtet.

3. Elektrische Maschine nach Anspruch 1 oder 2,
**dadurch gekennzeichnet,**
**dass** die anbauteilseitige Verbindungskontur (9b) in einem einen Maschinenwellenabschnitt aufnehmenden Verbindungsstutzen (9a) gebildet ist.

4. Elektrische Maschine nach einem der Ansprüche 1 bis 3, wobei sich die Passnut (11) über einen axial begrenzten Wellenabschnitt der Maschinenwelle (5) und/oder über einen tangential begrenzten Umfangsabschnitt der Maschinenwelle (5) erstreckt.

5. Elektrische Maschine nach einem der Ansprüche 1 bis 4, wobei die Maschinenwelle (5) im Bereich der Schnittstelle (8) eine Kragen- und/oder Schulterkontur (13) aufweist, gegen die sich das Anbauteil (9) abstützt.

6. Elektrische Maschine nach einem der Ansprüche 1 bis 5, wobei das Anbauteil (9) gegen die bzw. mit der Maschinenwelle (5) verschraubt ist.

## Claims

1. Electric machine with a machine housing (2) for accommodating a stator (3) and a rotor (4) seated on a machine shaft (5), and with an add-on part (9) connected to the machine shaft (5) via a mechanical interface (8),
- wherein the interface (8) is provided and designed for producing a form-fitting and/or force-fitting connection between a shaft-side spring key element (10) and a connecting socket (9a) of the add-on part (9), said connecting socket (9a) being seated on the machine shaft (5), and
- wherein a recess is provided in the machine shaft (5), both in the axial direction thereof and in the circumferential direction thereof, as a shaft-side fitting groove (11), in which the fitting body (10a) is seated,
**characterized in**
- **that** the spring key element (10) comprises a fitting body (10a) and a spring body (10b), which is raised relative to the fitting body (10a) and is set back to form a covering section (10c),
- **that** the covering section (10c) is aligned with the shaft surface (14) of the machine shaft (5) or is set back relative to the shaft surface (14) toward the shaft axis at least slightly radially inwards,
- **that** in the connection with the add-on part (9), the covering section (10c) of the spring key element (10) is covered by the add-on part (9) and the spring body (10b) is seated in a connection contour (9b) of the add-on part (9), which is open on the end face.

2. Electric machine according to claim 1,
**characterized in**
**that** the spring body (10b) is aligned with the fitting body (10a) on a narrow side of the fitting body (10a).

3. Electric machine according to claim 1 or 2,
**characterized in**
**that** the add-on part-side connecting contour (9b) is formed in a connecting socket (9a) receiving a machine shaft portion.

4. Electric machine according to one of claims 1 to 3, wherein the fitting groove (11) extends over an axially limited shaft section of the machine shaft (5) and/or over a tangentially limited circumferential section of the machine shaft (5).

5. Electric machine according to one of claims 1 to 4, wherein the machine shaft (5) has a collar and/or shoulder contour (13) in the region of the interface (8), against which the add-on part (9) is supported.

6. Electric machine according to one of the claims 1 to 5, wherein the add-on part (9) is screwed against or respectively to the machine shaft (5).

## Revendications

1. Machine électrique avec un boîtier de machine (2) pour recevoir un stator (3) et un rotor (4) placé sur un arbre de machine (5), et avec une pièce rapportée (9) reliée à l'arbre de machine (5) par une interface mécanique (8),
- dans laquelle l'interface (8) est prévue et conçue pour établir une connexion par liaison de forme et/ou de force entre un élément de clavette (10) côté arbre et une tubulure de raccordement (9a) de la pièce rapportée (9), ladite tubulure de raccordement (9a) étant placée sur l'arbre de machine (5), et
- dans laquelle un évidement est prévu dans l'arbre de machine (5), tant dans sa direction axiale et dans sa direction circonférentielle, en tant que rainure de clavette (11) côté arbre, dans laquelle le corps d'ajustement (10a) est logé,
**caractérisée en ce**
- **que** l'élément de clavette (10) comprend un corps d'ajustement (10a) et un corps de ressort (10b), qui est surélevé par rapport au corps d'ajustement (10a) et est en retrait pour former une section de recouvrement (10c),
- **que** la section de recouvrement (10c) est alignée avec la surface d'arbre (14) de l'arbre de machine (5) ou est en retrait par rapport à la surface d'arbre (14) vers l'axe d'arbre au moins légèrement radialement vers l'intérieur,
- **que** dans la connexion avec la pièce rapportée (9), la section de recouvrement (10c) de l'élément de clavette (10) est recouverte par la pièce rapportée (9) et le corps de ressort (10b) est logé dans un contour de raccordement (9b) de la pièce rapportée (9) ouvert du côté frontal.

2. Machine électrique selon la revendication 1,
**caractérisée en ce**
**que** le corps de ressort (10b) est aligné avec le corps d'ajustement (10a) sur un côté étroit de celui-ci.

3. Machine électrique selon la revendication 1 ou 2,
**caractérisée en ce**
**que** le contour de raccordement (9b) du côté de la pièce rapportée est formé dans une tubulure de raccordement (9a) recevant une section d'arbre de machine.

4. Machine électrique selon l'une des revendications 1 à 3, dans laquelle la rainure de clavette (11) s'étend sur une section de l'arbre de la machine (5) limitée axialement et/ou sur une section circonférentielle de l'arbre de la machine (5) limitée tangentiellement.

5. Machine électrique selon l'une des revendications 1 à 4, dans laquelle l'arbre de machine (5) comprend, dans la zone de l'interface (8), un contour de collet et/ou d'épaulement (13), contre lequel s'appuie la pièce rapportée (9).

6. Machine électrique selon l'une des revendications 1 à 5, dans laquelle la pièce rapportée (9) est vissée contre ou respectivement à l'arbre de la machine (5).
